Europäisches Patentamt

(19) European Patent Office

Office européen des brevets

(11) Numéro de publication: **0 028 580**

**A2**

(12) # DEMANDE DE BREVET EUROPEEN

(21) Numéro de dépôt: **80810310.5**

(22) Date de dépôt: **09.10.80**

(51) Int. Cl.³: **H 01 S 3/04**
**H 01 S 3/092**

(30) Priorité: 31.10.79 CH 9757/79
14.12.79 FR 7930670
06.11.79 US 91399
14.07.80 US 168497

(43) Date de publication de la demande:
13.05.81 Bulletin 81/19

(84) Etats Contractants Désignés:
DE GB IT NL SE

(71) Demandeur: **LASAG AG**
**Bernstrasse 11**
**CH-3600 Thun(CH)**

(72) Inventeur: **Schwob, Hans-Peter**
**Fliederweg 4**
**CH-3138 Uetendorf(CH)**

(72) Inventeur: **Soppelsa, Peter**
**Schwandstrasse 679**
**CH-3634 Thierachern(CH)**

(74) Mandataire: **Frechede, Michel**
**c/o Société Générale de l'Horlogerie Suisse S.A., ASUAG**
**Faubourg du Lac 6**
**CH-2501 Bienne(CH)**

(54) **Dispositif d'émission laser à cristal solide à circuit de refroidissement externe.**

(57) L'invention concerne les dispositifs d'émission laser à cristal solide. Le dispositif comporte un circuit de refroidissement du cristal et du tube à décharge extérieur à la cavité de pompage (20). Le dispositif comporte dans la cavité de pompage munie d'un réflecteur (3) de section elliptique, un cristal d'émission (1) et un tube à décharge (2) d'axe de symétrie en coïncidence avec une ligne focale du réflecteur respectivement. Le circuit de refroidissement du cristal (1) comporte au moins un conducteur thermique (21) en contact avec le cristal (1). Le circuit de refroidissement du tube à décharge comporte au moins un conducteur thermique (23) en contact avec le tube à décharge. Chaque conducteur thermique (21), (23) est également en contact avec une paroi dissipatrice (22) de la cavité de pompage (20). Le tube à décharge (2) comporte une électrode d'allumage parallèle constituée par un fil rectiligne (27) isolé du réflecteur (3) par un tube isolant (271).

Application aux dispositifs d'émission laser pour machines d'usinage.

Fig 2

Dispositif d'émission laser à cristal

solide à circuit de refroidissement externe.

L'invention concerne les dispositifs d'émission laser à cristal solide.

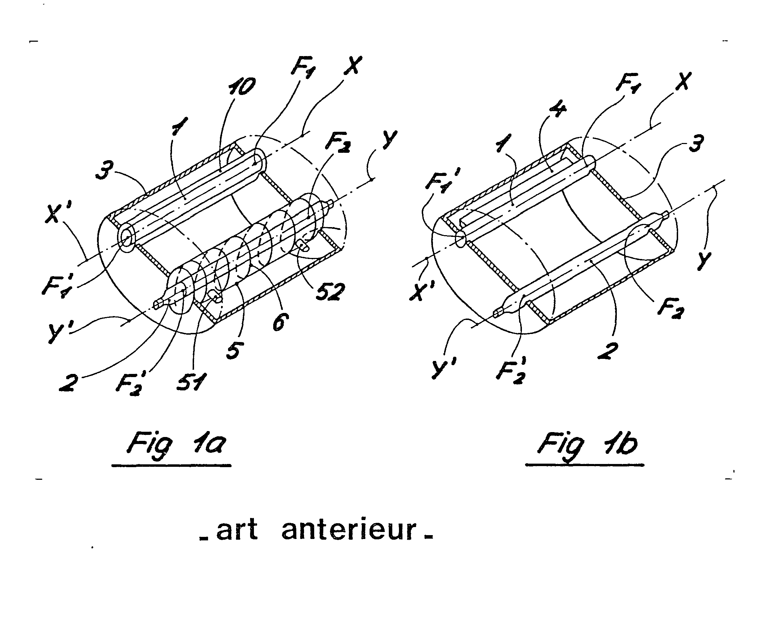

Les dispositifs d'émission laser à cristal solide comportent habituellement dans une cavité de pompage munie de deux miroirs dont l'un permet la transmission du faisceau laser, un cristal d'émission constitué par exemple par un cristal de la famille du corindon et un tube à gaz à décharge permettant l'excitation de l'émission laser au sein du cristal. Le cristal 1 et le tube à gaz à décharge 2 sont, par exemple, ainsi que représentés en figure 1a, de révolution par rapport à un axe de symétrie longitudinal noté x'x et y'y respectivement et disposés dans un réflecteur 3 de section elliptique. Les axes de symétrie longitudinale sont en coïncidence avec les lignes focales du réflecteur 3 notées respectivement $F'_1$ $F_1$ et $F_2$ $F'_2$.

Pour une description plus détaillée de la structure et du fonctionnement de ce type de dispositif d'émission laser on se rapportera, par exemple, à la publication de K. Tradowsky intitulée "Laser" publiée en 1968 par Vogel-Verlag, Würzburg, Allemagne Fédérale.

Afin d'assurer la dissipation de la chaleur dégagée par l'émission laser au niveau du cristal 1 et par l'ionisation du tube à décharge, les systèmes d'émission laser comportent, le plus souvent, un circuit de refroidissement constitué par exemple ainsi que décrit dans la demande de brevet français déposée le 11 avril 1972 sous le numéro 72 12 611 et publiée sous le numéro 2 134 375 par deux enveloppes de verre 10, 5, contenant respectivement le cristal 1 et le tube à gaz à décharge 2 et dans lesquels un courant de fluide réfrigérant, de l'eau désionisée et filtrée par exemple, est engendré dans chacune des enveloppes. L'excitation du tube à décharge est effectuée soit par excitation série à l'aide de deux électrodes implantées respectivement à chaque extrémité du tube à décharge soit par excitation parallèle,l'électrode d'excitation étant alors constituée par un fil conducteur 6 enroulé en spirale autour du tube à décharge et de préférence plaqué contre la paroi de l'enveloppe de verre 5. Cette enveloppe de verre permet d'isoler l'électrode d'excitation du tube à décharge de la cavité de pompage, cette électrode étant portée, en fonctionnement, à une tension élevée par rapport au potentiel de référence du dispositif afin de provoquer l'ionisation du tube à décharge.

Une autre solution représentée figure 1b consiste à effectuer un refroidissement par air, le circuit de refroidissement étant constitué au niveau du cristal par un élément conducteur thermique 4 brasé sur une génératrice du cristal, sensiblement sur la totalité de la longueur de celle-ci, le tube à décharge étant simplement refroidi par convexion de l'air ambiant contenu dans la cavité de pompage.

De tels dispositifs nécessitent cependant d'importants moyens de maintenance afin d'assurer un fonctionnement convenable du dispositif d'émission notamment en ce qui concerne le maintien de la qualité de la constante diélectrique du fluide de refroidissement qui nécessite en particulier, dans le cas de l'eau désionisée, l'utilisation de circuits de désionisation encombrants et coûteux. De plus, l'enveloppe de verre contenant le fluide réfrigérant occasionne également, par réflexion, des pertes d'énergie lumineuse émise par le tube à décharge et entraîne ainsi une diminution du rendement du dispositif d'émission.

Dans le cas du refroidissement par un fluide tel que l'air, ce dernier nécessite une installation de dépoussiérage de l'air de réfrigération en raison des risques de dépôt de ces poussières sur les différentes parties de la cavité de pompage et du tube à décharge entraînant, à terme, une diminution du rendement du dispositif d'émission. Le refroidissement du cristal d'émission bien que permettant une dissipation optimale présente l'inconvénient d'une technique de réalisation onéreuse car le conducteur doit être constitué par un film métallisé sous vide susceptible d'être brasé sur le cristal, cette opération pouvant de plus entraîner, au sein du cristal, après refroidissement, l'apparition de contraintes mécaniques néfastes aux caractéristiques cristallographiques et optiques du cristal. En tout état de cause l'existence même d'un conducteur métallique sur la quasi totalité de la longueur du cristal entraîne, du fait de l'existence d'un gradient de température transversal, sensiblement assimilable pour le faisceau laser à un prisme thermique, une distorsion de ce faisceau et de ses conditions de propagation et en cela une irrégularité dans la répartition des modes d'émission laser. Le refroidissement du tube à décharge par simple convexion n'autorise pas l'utilisation de tubes à décharge de puissance électrique supérieure à quelques dizaines de watts limitant en cela, pour un rendement donné sensiblement constant des dispositifs d'émission laser, la puissance effective d'émission laser.

La présente invention permet de remédier aux inconvénients précités.

Un objet de la présente invention est la mise en oeuvre d'un dispositif d'émission laser dans lequel la dissipation de l'énergie thermique dégagée par le cristal d'émission et par le tube à décharge est effectuée à l'extérieur de la cavité de pompage.

Un autre objet du dispositif selon l'invention est la mise en oeuvre d'un dispositif d'émission laser dans lequel le circuit de refroidissement disposé pour l'essentiel hors de la cavité de pompage n'entraîne pas de distorsion du faisceau laser.

Un autre objet du dispositif selon l'invention est la mise en oeuvre d'un dispositif d'émission laser dans lequel le circuit de refroidissement n'entraîne pas de diminution du rendement énergétique du dispositif.

Un autre objet du dispositif selon l'invention est la mise en oeuvre d'un dispositif d'émission laser d'encombrement et de coût réduits.

Le dispositif d'émission laser à cristal solide selon l'invention comporte dans une cavité de pompage un cristal d'émission et un tube à gaz à décharge.

L'axe de symétrie longitudinale du cristal d'émission, axe optique du cristal, et l'axe de symétrie longitudinale du tube à décharge sont sensiblement parallèles. Le circuit de refroidissement du cristal comporte au moins un conducteur thermique en contact avec le cristal et sensiblement disposé dans un plan perpendiculaire à l'axe de symétrie longitudinale du cristal. Le circuit de refroidissement du tube à décharge comporte au moins un conducteur thermique en contact avec le corps du tube à décharge, chaque conducteur thermique étant d'autre part en contact avec au moins une paroi dissipatrice de la cavité de pompage. Le tube à décharge comporte en outre une électrode d'allumage parallèle constituée par un fil rectiligne parallèle à l'axe de symétrie longitudinal du tube à décharge et isolé de la cavité de pompage par un tube isolant.

De tels dispositifs d'émission laser sont utilisables en particulier dans les machines d'usinage de précision de puissance électrique pouvant atteindre 300 watts.

L'invention sera mieux comprise à l'aide de la description et des dessins ci-après dans lesquels, outre les figures 1a, 1b qui représentent un dispositif d'émission laser à cristal solide de l'art antérieur,

la figure 2 représente, en perspective arrachée un dispositif d'émission laser complet conformément à l'invention,

la figure 3 représente un détail d'une variante de réalisation du dispositif d'émission laser conformément à la figure 2.

Dans les dessins où les mêmes références désignent les mêmes éléments, les cotes et proportions relatives de ces derniers n'ont pas été respectées afin de ne pas nuire à leur clarté et d'assurer une meilleure compréhension de l'ensemble.

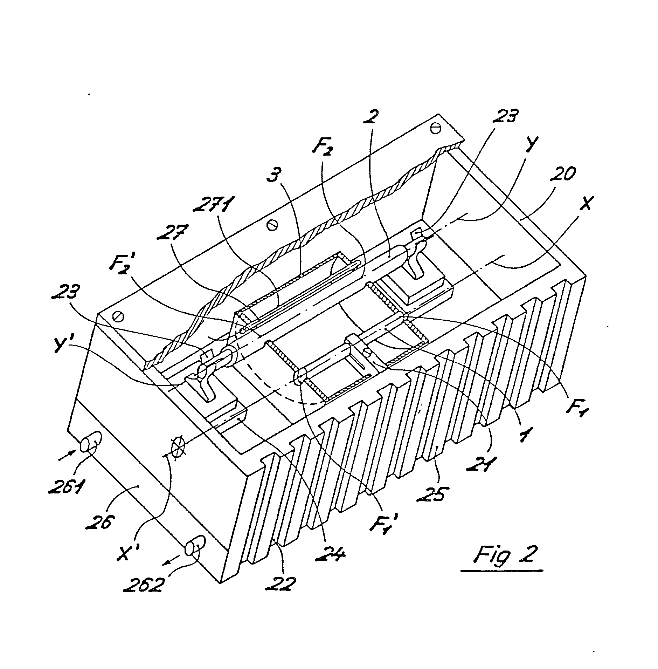

Selon la figure 2, le dispositif d'émission laser à cristal solide selon l'invention comporte dans une cavité de pompage 20, munie par exemple d'un réflecteur 3, un cristal d'émission 1 et un tube à gaz à décharge 2 disposés dans ce réflecteur de section elliptique 3. La cavité de pompage peut également simplement comporter sur ses parois internes une couche de matériau réfléchissant. Sur la figure 2, la cavité de pompage a été représentée paroi supérieure ôtée permettant ainsi de découvrir l'agencement relatif des constituants du dispositif d'émission laser. Le cristal d'émission 1 et le tube à décharge 2 sont de révolution et ont respectivement un axe de symétrie longitudinale x'x et y'y en coïncidence avec une ligne focale $F_1F'_1$, $F_2F'_2$ du réflecteur 3, l'axe de symétrie x'x du cristal coïncidant avec l'axe optique de ce dernier. Sur la figure 2, le réflecteur de section elliptique 3 a été représenté en coupe selon un plan de coupe x'x, y'y.

Le dispositif d'émission laser selon l'invention comporte un circuit de refroidissement du cristal d'émission 1 comportant au moins un conducteur thermique en contact avec le cristal 1 et sensiblement disposé dans un plan perpendiculaire à l'axe longitudinal x'x du cristal. Le conducteur thermique a une dimension au niveau de sa zone de contact avec le cristal et selon une direction parallèle à l'axe longitudinal du cristal inférieure 1/8 de la longueur totale du cristal. A titre d'exemple non limitatif, le conducteur thermique tel que représenté en figure 2 est constitué par une pince métallique 21 d'axe de symétrie longitudinale perpendiculaire à l'axe longitudinal du cristal. La pince métallique comporte des becs de serrage de dimension selon une direction parallèle à l'axe longitudinal du cristal inférieure à 1/8 de la longueur du cristal et enserre le cristal dans sa zone médiane sensiblement. La pince métallique est mécaniquement solidaire d'une paroi dissipatrice 22 de la cavité de pompage et permet ainsi d'assurer le maintien en position du cristal par un seul point de fixation. Le circuit de refroidissement du tube à décharge 2 comporte au moins un conducteur thermique en contact avec le corps du tube à décharge. Chaque conducteur thermique en contact soit avec le cristal soit avec le tube à décharge est d'autre part en contact avec au moins une paroi dissipatrice de la cavité de pompage. Selon un mode de réalisation non limitatif de l'invention représentée en figure 2, le circuit de refroidissement du tube à décharge 2 comporte à chaque extrémité du tube à décharge, un clip métallique 23 permettant le positionnement du tube à décharge, sa fixation et son alimentation à la tension de fonctionnement. Les circuits d'alimentation à la tension de fonctionnement du tube à décharge ne sont pas représentés figure 2 afin de ne pas nuire à la clarté de celle-ci. Chaque clip métallique, conducteur thermique, est fixé à une paroi dissipatrice de la cavité de pompage 20 par l'intermédiaire d'un socle 24 de matériau conducteur thermique et isolant électrique. A titre d'exemple non limitatif, chaque clip métallique est fixé par l'intermédiaire du socle 24 constitué par une plaquette de céramique à l'aide d'une résine thermodurcissable. Selon le mode de réalisation non limitatif de l'invention, la paroi dissipatrice 22 de la cavité de pompage comporte sur sa face externe des éléments rayonnants 25. Ces éléments rayonnants sont de préférence orientés verticalement en position de fonctionnement du dispositif d'émission et porteurs d'un revêtement leur assurant les conditions de rayonnement optimal des corps noirs.

Selon le mode de réalisation représenté figure 2, la paroi dissipatrice constituée par la base de la cavité de pompage comporte de manière non limitative sur sa face externe un échangeur de chaleur 26 dans lequel un courant de fluide de refroidissement est créé par des prises d'entrée, sortie 261, 262.

Conformément au dispositif d'émission laser selon l'invention tel que représenté figure 2, le tube à décharge comporte une électrode d'allumage ou d'excitation parallèle constituée par un fil rectiligne 27 parallèle à l'axe de symétrie du tube à décharge. Le fil rectiligne constituant l'électrode d'allumage du tube à décharge est isolé de la cavité de pompage et du réflecteur par un tube isolant thermorésistant 271 en verre par exemple. Ce tube isolant thermorésistant laissant libre la transmission de l'énergie lumineuse engendrée par le tube à décharge entre celui-ci et le cristal d'émission laser, le tube à décharge se trouvant à l'extérieur du tube isolant, l'électrode d'excitation et son enveloppe protectrice n'entraînent pas de diminution du rendement énergérique du dispositif par réflexion ou absorbtion du rayonnement lumineux du tube à décharge.

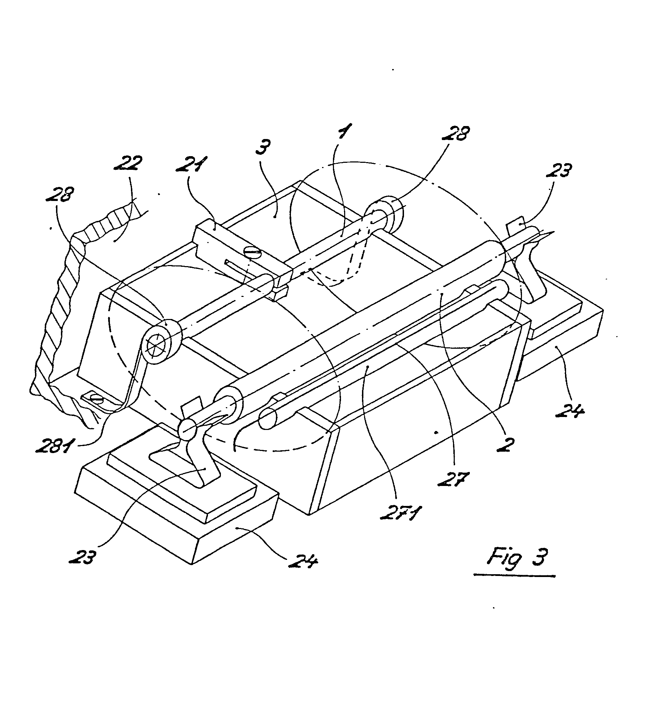

La figure 3 représente un mode de réalisation particulier non limitatif du circuit de refroidissement du cristal d'émission comportant à chaque extrémité du cristal une pièce conductrice 28 en forme d'anneau. Chaque pièce métallique 28 est engagée sur une extrémité du cristal et est en contact avec celui-ci. Chaque pièce conductrice 28 est reliée à la paroi dissipatrice 22 de la cavité de pompage par un conducteur souple 281 constitué par exemple par une tresse métallique de fils de cuivre.

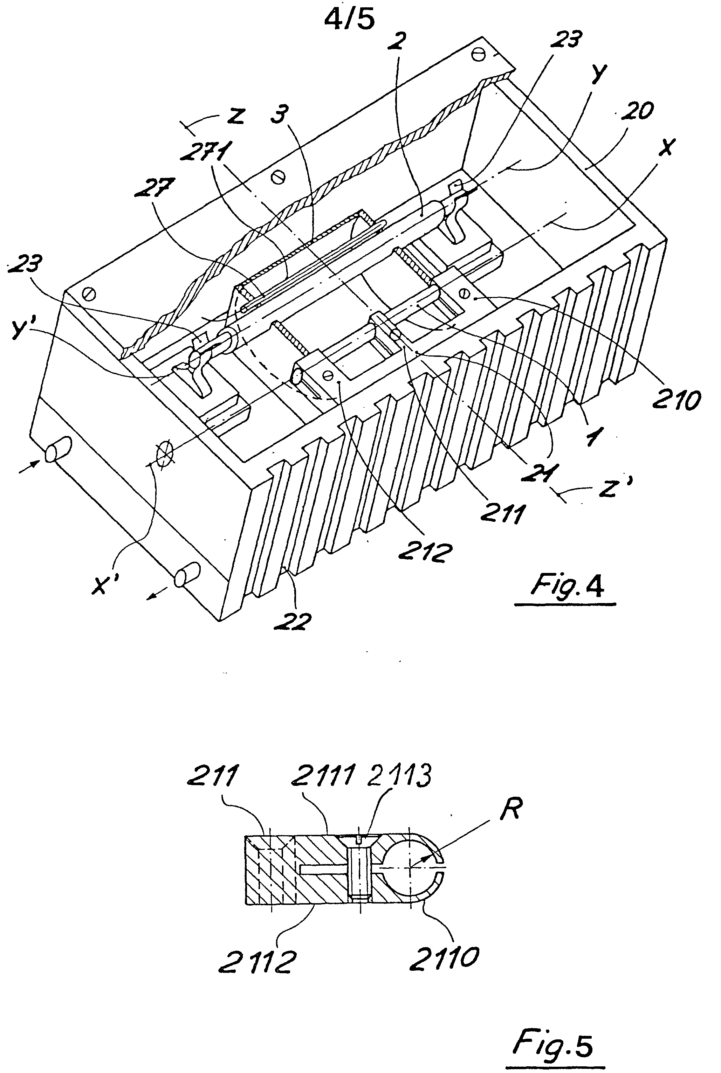

Selon le mode de réalisation particulier représenté figure 4, le circuit de refroidissement du cristal comporte un jeu de trois pinces métalliques entourant ce dernier sensiblement dans sa zone médiane et à ses extrémités respectivement. Ce mode de réalisation permet d'améliorer la dissipation de la chaleur dégagée en fonctionnement par l'émission laser et par le tube à décharge tout en autorisant un meilleur maintien de l'axe optique du cristal en coïncidence avec une ligne focale du réflecteur de la cavité de pompage.

Ce mode de réalisation particulier de l'invention permet de maintenir l'axe optique du cristal, au niveau des extrémités de celui-ci, libre de toute vibration mécanique.

Le circuit de refroidissement du cristal comprend un jeu de trois pinces métalliques 210, 211, 212 dont l'axe longitudinal Z Z' est perpendiculaire à l'axe longitudinal du cristal. Les pinces métalliques 211, 210, 212 entourent le cristal 1 dans sa zone médiane et à ses extrémités respectivement. Les pinces métalliques ont, au niveau de leur zone de contact avec le cristal 1, une dimension inférieure ou égale à $\frac{1}{10}$ de la longueur du cristal. Les pinces métalliques sont constituées d'un métal dont le coefficient de conductibilité thermique est supérieur ou égal à 0,694 W. cm$^{-1}$. $^{\circ}$K$^{-1}$. Elles peuvent par exemple être constituées en cuivre ou ses alliages.

Les pinces métalliques sont mécaniquement solidaires d'une paroi dissipatrice 22 de la cavité de pompage et permettent ainsi d'assurer le maintien du cristal dans la position précitée, les extrémités de ce dernier étant maintenues exemptes de vibrations mécaniques.

Selon la figure 5 les pinces métalliques telles que 210, 211, 212 comportent à leur extrémité de préhension deux tiges élémentaires 2111 , 2112  reliées par une liaison élastique pour former le corps de chaque pince.  La liaison élastique des deux tiges est obtenue par l'utilisation des propriétés d'élasticité du métal ou de l'alliage constitutif des pinces.

Les deux tiges élémentaires comportent en outre à l'extrémité opposée à la liaison élastique un logement 2110 dans lequel le cristal est engagé. Les logements 2110 forment la zone de contact de la pince métallique et du cristal. Selon le mode de réalisation non limitatif représenté figure 5, les tiges élémentaires sont munies de logement en forme de U. Ces dernières peuvent également comporter des logements en forme de V sans sortir du cadre de la présente invention. Selon le mode de réalisation particulier représenté figure 5, les logements en forme de U ont un rayon de courbure R sensiblement identique au rayon de courbure de la section droite du cristal. Les tiges élémentaires comportent de plus  une vis de serrage 2113  disposée entre  la liaison élastique formant le corps  de la pince  et les  logements  et  permettant la réunion  des  deux  tiges  élémentaires. La  vis  de serrage peut être par exemple une vis micrométrique afin de  permettre, compte tenu de l'élasticité de la liaison des tiges élémentaires et de la forme en U des logements dont le rayon de courbure est sensiblement identique à celui du cristal, un réglage précis de la contrainte mécanique uniforme appliquée à la périphérie du cristal au niveau de chaque zone de contact des pinces et du cristal.

Selon le mode de réalisation de la figure 4, les deux pinces métalliques 210, 212 entourant respectivement le cristal 1 à ses extrémités sont situées à l'extérieur du réflecteur 3 de section elliptique. Dans ce cas ces deux pinces métalliques peuvent avoir une largeur supérieure au $\frac{1}{10}$ de la longueur du cristal précité du fait qu'elles n'interceptent pas l'énergie lumineuse illuminant le cristal.

Conformément à un mode de réalisation préférentiel de l'invention représenté figure 6b, le circuit de refroidissement du cristal du dispositif d'émission laser à cristal solide selon l'invention comporte un premier jeu 31 de trois pinces métalliques d'axe longitudinal de symétrie Z Z' perpendiculaire à l'axe longitudinal X' X du cristal. Les trois pinces métalliques 311, 312, 313 entourent le cristal 1 approximativement dans sa zone médiane et dans des zones prédéterminées telles que la longueur du cristal située à l'intérieur du réflecteur 3 est divisée en quatre parties élémentaires $\ell 1$, $\ell 2$, $\ell 3$, $\ell 4$ de longueur sensiblement égale. Chaque pince 311, 312, 313 peut avoir par exemple au niveau de sa zone de contact avec le cristal une dimension inférieure ou égale à $\frac{1}{30}$ de la longueur du cristal. Les pinces métalliques peuvent être également constituées par du cuivre ou ses alliages. Le circuit de refroidissement du cristal représenté figure 6b comporte également un deuxième jeu 32 de deux pinces métalliques 321, 322 d'axe de symétrie sensiblement perpendiculaire à l'axe de symétrie longitudinal du cristal.
Les pinces métalliques 321, 322 formant le deuxième jeu 32 sont chacune
disposées à l'extérieur du réflecteur 3, chacune étant de préférence en
contact avec la paroi externe du réflecteur. Chacune des pinces métalliques 321, 322 entoure respectivement le cristal approximativement à ses
extrémités. Les pinces métalliques 311, 312, 313 et 321, 322 ou 210, 211,
212 peuvent ne pas comporter de vis de serrage, l'élasticité de chaque
tige élémentaire constituant les pinces étant suffisante pour assurer un
maintien convenable du cristal dans sa position normale. Le barreau de
cristal peut être engagé dans les logements des pinces par exemple
après ouverture des tiges élémentaires constituant la pince au moyen
d'un outil tel que par exemple une lame insérée entre les tiges élémentaires de chaque pince. Après positionnement du cristal, en vue notamment d'obtenir une symétrie du dispositif par rapport à la zone médiane
du cristal, pince 312, l'outil ou les outils peuvent être ôtés et les
vis de serrage peuvent être vissées de manière à maintenir définitivement
le barreau de cristal dans sa position.

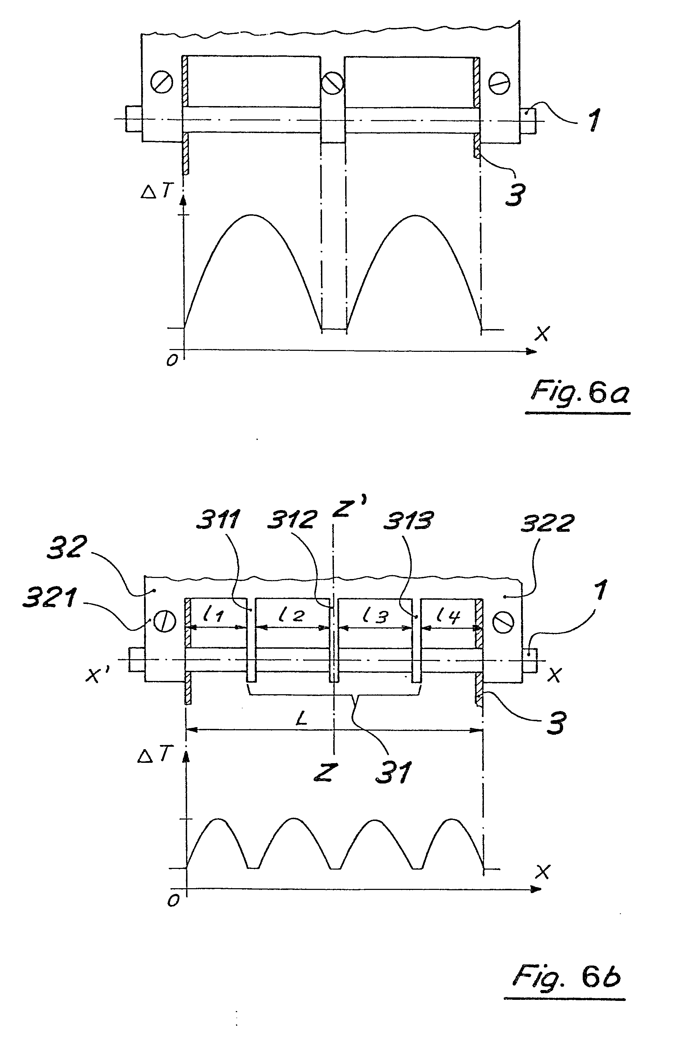

La position finale du barreau de cristal sur son support et la distribution de température correspondante du cristal le long de son axe longitudinal est représentée figure 6b. L'élevation de température la plus
élevée du barreau de cristal entre deux pinces consécutives, sensiblement
située au milieu des deux pinces consécutives, apparaît être la moitié
de l'élevation de température correspondante du barreau de cristal à
trois pinces métalliques représenté figure 6a.

Une puissance moyenne d'émission de 5 W a été obtenue en fonctionnement pour un barreau de cristal Nd-YAG de diamètre ¼ de pouce et de longueur 3 pouces.

On a ainsi décrit un dispositif d'émission laser dans lequel la dissipation de la chaleur dégagée par le fonctionnement du tube à décharge et du cristal d'émission est effectuée à l'extérieur de la cavité de pompage permettant notamment, avec une simplification du mode de réalisation de tels dispositifs, une diminution des coûts d'entretien et de maintenance.

REVENDICATIONS

1. Dispositif d'émission laser à cristal solide comportant, dans une cavité de pompage, un cristal d'émission et un tube à gaz à décharge d'axe de symétrie longitudinale parallèles, un circuit de refroidissement du cristal d'émission et du tube à décharge, caractérisé en ce que le circuit de refroidissement du cristal comporte au moins un conducteur thermique en contact avec le cristal et sensiblement disposé dans un plan perpendiculaire à l'axe de symétrie longitudinale du cristal, le circuit de refroidissement du tube à décharge comportant au moins un conducteur thermique en contact avec le corps du tube à décharge, chaque conducteur thermique étant d'autre part en contact avec au moins une paroi dissipatrice de la cavité de pompage.

2. Dispositif d'émission laser selon la revendication 1, caractérisé en ce que le circuit de refroidissement du cristal est constitué par une pince métallique d'axe de symétrie longitudinale perpendiculaire à l'axe longitudinal du cristal et de dimension, au niveau de sa zone de contact avec le cristal et selon une direction parallèle à l'axe du cristal, inférieure à 1/8 de la longueur du cristal, la pince métallique enserrant le cristal sensiblement dans sa zone médiane et assurant le maintien en position de celui-ci.

3. Dispositif d'émission laser selon les revendications 1 ou 2, caractérisé en ce que le circuit de refroidissement du cristal comporte en outre à chaque extrémité de ce dernier une pièce métallique en forme d'anneau engagée sur chaque extrémité du cristal, chaque pièce métallique en forme d'anneau étant reliée par un conducteur souple à une paroi dissipatrice de la cavité de pompage.

4. Dispositif d'émission laser selon l'une des revendications 1 à 3, caractérisé en ce que le circuit de refroidissement du tube à décharge comporte à chaque extrémité du tube à décharge un clip métallique permettant la fixation et le positionnement du tube à décharge et son alimentation, chaque clip métallique étant fixé à la paroi dissipatrice par l'intermédiaire d'un socle de matériau conducteur thermique et isolant électrique.

5. Dispositif d'émission laser selon la revendication 4, caractérisé en ce que le socle de matériau conducteur thermique et isolant électrique est constitué par de la céramique.

6. Dispositif d'émission laser selon la revendication 4, caractérisé en ce que le tube à décharge comporte une électrode d'allumage parallèle constituée par un fil rectiligne parallèle à l'axe de symétrie du tube à décharge et isolé de la cavité de pompage par un tube isolant.

7. Dispositif d'émission laser selon l'une des revendications 1, 2, 3 ou 4, caractérisé en ce que la paroi dissipatrice de la cavité de pompage comporte sur sa face externe des éléments rayonnants.

8. Dispositif d'émission laser selon l'une des revendications 1, 2, 3 ou 4, caractérisé en ce que la paroi dissipatrice comporte sur sa face externe un échangeur de chaleur à fluide de refroidissement.

9. Dispositif d'émission laser selon la revendication 8, caractérisé en ce que l'échangeur de chaleur comporte un circuit de refroidissement par eau.

10. Dispositif d'émission laser selon l'une des revendications 1, 4, 5, 6, 7, 8, 9, caractérisé en ce que le circuit de refroidissement du cristal comporte un jeu de trois pinces métalliques d'axe longitudinal de symétrie perpendiculaire à l'axe longitudinal du cristal, lesdites pinces métalliques entourant le cristal sensiblement dans sa zone médiane et à ses extrémités respectivement.

11. Dispositif d'émission laser selon la revendication 10, caractérisé en ce que lesdites pinces métalliques ont au niveau de leur zone de contact avec le cristal une dimension inférieure ou égale à $\frac{1}{10}$ de la longueur dudit cristal.

12. Dispositif d'émission laser selon l'une des revendications 2 à 11, caractérisé en ce que lesdites pinces métalliques sont constituées par un métal ou alliage métallique dont le coefficient de conductibilité thermique est supérieur ou égal à 0,694 W. $cm^{-1}$ . $^{o}K^{-1}$.

13. Dispositif d'émission laser selon la revendication 10, caractérisé en ce que les dites pinces métalliques sont constituées à leur extrémité de préhension par deux tiges élémentaires, lesdites tiges élémentaires étant réunies par une liaison élastique pour former le corps desdites pinces, les deux tiges élémentaires étant munies à l'extrémité opposée à ladite liaison élastique d'un logement dans lequel le cristal est engagé.

14. Dispositif d'émission laser selon la revendication 13, caractérisé en ce que lesdites tiges élémentaires comportent un logement sensiblement en forme de U, le rayon de courbure des logements étant sensiblement égal au rayon de courbure de la section droite du cristal, lesdites tiges élémentaires comportant en outre une vis de serrage.

0028580

15. Dispositif d'émission laser selon l'une des revendications 1, 4, 6, 7, 8, 9, caractérisé en ce que ledit circuit de refroidissement du cristal comporte:

- un premier jeu de trois pinces métalliques d'axe longitudinal de symétrie perpendiculaire à l'axe longitudinal de symétrie du cristal, lesdites pinces métalliques entourant respectivement le cristal sensiblement dans sa zone médiane et au niveau de zones prédéterminées, la longueur dudit cristal située à l'intérieur du réflecteur étant divisée en parties élémentaires de longueur égale,

- un deuxième jeu de deux pinces métalliques d'axe longitudinal de symétrie perpendiculaire à l'axe longitudinal de symétrie du cristal, lesdites pinces métalliques disposées à l'extérieur dudit réflecteur entourant le cristal à ses extrémités respectivement, lesdits premier et deuxième jeu de pinces métalliques permettant une distribution de température du cristal le long de son axe de symétrie longitudinal sensiblement symétrique par rapport à la zone médiane du cristal.

Fig 1a

Fig 1b

_art anterieur_

_Fig 2_

Fig 3

Fig.4

Fig.5

0028580

*Fig. 6a*

*Fig. 6b*